# EUROPÄISCHE PATENTANMELDUNG

(11) **EP 3 470 232 A1**
(43) Veröffentlichungstag der Anmeldung: **17.04.2019**
(21) Anmeldenummer: 18199256.1
(22) Anmeldetag: 09.10.2018
(51) Int. Cl.: B41J 29/02, B41J 29/13

(54) **DRUCKSYSTEM ZUM DRUCKEN VON BILDERN UND/ODER DOKUMENTEN**

(30) Priorität: 13.10.2017 DE 102017123937
(71) Anmelder: di support GmbH, 65760 Eschborn (DE)
(72) Erfinder: Naruhn, Ralph, 63303 Dreieich (DE); Schaub, Gordon, 61440 Oberursel (DE)
(74) Vertreter: Patentanwälte Olbricht Buchhold Keulertz

(57) **Zusammenfassung**

Die Erfindung betrifft ein Drucksystem (1) zum Drucken von Bildern und/oder Dokumenten mit zumindest einem ersten Druckmodul (2).

Um eine flexible Aufstellung zu ermöglichen, weist das Druckmodul (2) ein quaderförmiges Gehäuse (3) mit einem Oberteil (5), einem Bodenteil (6), einem Frontteil (9), einem Rückenteil (9) und zwei Seitenteile (7, 8) auf, wobei das Oberteil (5) mit dem Bodenteil (6) sowie den zwei Seitenteilen (7, 8) einen Korpus (4) bilden, der durch das Frontteil (9) vorderseitig und durch das Rückenteil (10) rückseitig geschlossen ist, wobei innerhalb des Korpus (4) ein Aufnahmeraum (17) für einen Drucker und im Frontteil (9) eine Bedienerschnittstelle (12) sowie eine mit einem Entnahmefach (16) verbundene Entnahmeöffnung (15) für aus dem Drucker kommende Druckmedien ausgebildet ist.

## Beschreibung

Die Erfindung betrifft ein Drucksystem zum Drucken von Bildern und/oder Dokumenten mit zumindest einem Druckmodul.

Derartige Drucksysteme werden beispielsweise auch als "Printterminals" oder "Sofort-Print-Kiosk" bezeichnet und kommen beispielsweise in Einzelhandelsgeschäften wie Drogerieketten, Supermärkten und ähnlichem zum Einsatz, um Kunden einen Ausdruck Ihrer digitalen Bilder beispielsweise von einem Mobiltelefon bzw. Smartphone zu ermöglichen.

Die Auswahl der zu druckenden Bilder erfolgt in der Regel nach Verbinden des Mobiltelefons bzw. Anschließen des Speichermediums über eine Bedienerschnittstelle des Drucksystems, wobei das Bild dann anschließend über einen der Bedienerschnittstelle zugewiesenen Drucker des Drucksystems ausgegeben wird. Diese Lösung benötigt einen relativ aufwendigen Hardwareeinsatz und ist dementsprechend kostspielig.

Die bekannten Lösungen arbeiten an sich zufriedenstellend, benötigen aber relativ viel Raum und bieten nur eine geringe Flexibilität im Hinblick auf die Aufstellung und Anzahl an Druckstationen. Dabei ist durch die an der Bedienerschnittstelle erfolgende Auswahl und gegebenenfalls Nachbearbeitung der zu druckenden Bilder oder Dokumente der jeweilige Drucker relativ lange blockiert, so dass unter Umständen die Kunden entsprechend lange auf einen freien Platz am Drucksystem warten müssen. Für eine zügigere Abwicklung müssten relativ viele Drucker und Bedienerschnittstellen vorgehalten werden, was jedoch aus Platz- und Kostengründen oft nicht möglich ist.

Der Erfindung liegt nun die Aufgabe zu Grunde, die Nachteile des Stands der Technik zu beseitigen und ein Drucksystem bereit zu stellen, das flexibel aufgestellt werden kann und einen hohen Durchsatz ermöglicht.

Erfindungsgemäß wird diese Aufgabe durch ein Drucksystem mit den Merkmalen des Anspruchs 1 gelöst. Besonders vorteilhafte Ausgestaltungen sind Gegenstand der Unteransprüche.

Bei einem Drucksystem zum Drucken von Bildern und/oder Dokumenten mit zumindest einem ersten Druckmodul ist erfindungsgemäß vorgesehen, dass das Druckmodul ein quaderförmiges Gehäuse mit einem Oberteil, einem Bodenteil, einem Frontteil, einem Rückenteil und zwei Seitenteilen aufweist, wobei das Oberteil mit dem Bodenteil sowie den zwei Seitenteilen einen Korpus bilden, der durch das Frontteil vorderseitig und durch das Rückenteil rückseitig geschlossen ist, wobei innerhalb des Korpus ein Aufnahmeraum für einen Drucker und im Frontteil eine Bedienerschnittstelle sowie eine mit einem Entnahmefach verbundene Entnahmeöffnung für aus dem Drucker kommende Druckmedien ausgebildet ist.

Das Druckmodul kann dabei durch das quaderförmige Gehäuse relativ kompakt und nur wenig größer als der darin untergebrachte Drucker sein. Dabei kann durch die Wahl einer entsprechenden Anzahl an Druckmodulen das Drucksystem relativ einfach an die gewünschte Leistungsfähigkeit angepasst werden, wobei die Druckmodule durch den quaderförmigen Korpus platzsparend miteinander kombiniert werden können. Dabei kann durch die im Frontteil ausgebildete Bedienerschnittstelle jedes Druckmodul als Stand-Alone-Gerät genutzt werden, wobei jedoch eine Vernetzung aller Druckmodule eines Drucksystems bevorzugt ist. Die ebenfalls am Frontteil, also in räumlicher Nähe zur Bedienerschnittstelle ausgebildete Entnahmeöffnung erlaubt dabei eine direkte Entnahme der fertig gestellten Bilder bzw. Dokumente. Ein etwaiges Suchen mit dem Risiko eines Vertauschens der Bilder bzw. Dokumente mit anderen Ausdrucken entfällt hierdurch.

Bevorzugterweise ist der Korpus einteilig ausgebildet. Dadurch kann er relativ stabil bei gleichzeitig geringem Gewicht hergestellt werden. Beispielsweise wird er dabei aus Kunststoff, Metall, Holz oder einer Kombination dieser Werkstoffe hergestellt. Dabei können Kanten, also Übergänge von den Seitenteilen zum Bodenteil bzw. Oberteil, mehr oder weniger stark gerundet werden, wodurch etwaige Spannungsspitzen im Material und das Risiko von Verletzungen vermieden werden.

In einer bevorzugten Weiterbildung weist die Bedienerschnittstelle eine berührungssensitive Anzeige auf. Eine berührungssensitive Anzeige, also ein sogenanntes "Touch-Display", ermöglicht sowohl benutzerdefinierte Eingaben als auch die direkte visuelle Bereitstellung von Informationen. Auf zusätzliche Eingabemöglichkeiten, wie beispielsweise haptische Elemente wie Tastaturen oder Schalter, kann so verzichtet werden. Dies minimiert die Herstellungskosten und das Risiko von Beschädigungen und vereinfacht darüber hinaus eine Reinigung des Druckmoduls.

Vorzugsweise weist die Bedienerschnittstelle eine Kamera oder einen Barcodereader auf. Über diese Kamera bzw. den Barcodereader können dann Informationen in das Drucksystem eingelesen werden. Mit besonderem Vorteil kann über diese Kamera ein maschinenlesbarer Code wie ein QR-Code erkannt und anhand dessen verschiedene Funktionen abgerufen werden. Beispielsweise werden so unterschiedliche Benutzerebenen der Bedienerschnittstelle eingestellt und/oder bestimmte Bilder bzw. Dokumente zum Drucken freigegeben.

In einer bevorzugten Ausgestaltung ist das Frontteil schwenkbar an einem der Seitenteile befestigt und am anderen Seitenteil über eine Halteeinrichtung lösbar festlegbar. Das Frontteil ist dann wie eine Tür am Korpus bewegbar befestigt. Durch einfaches Öffnen ist so ein ungehinderter Zugang zum Aufnahmeraum und damit zum Drucker möglich.

Dabei ist besonders bevorzugt, dass die Halteeinrichtung ein Schloss aufweist, über das sie mit einem Schlüssel zwischen einer Haltestellung und einer Freigabestellung bewegbar ist. Ein unbefugtes Öffnen des Gehäuses und damit Zugang zum Aufnahmeraum und damit zum Drucker kann so zuverlässig verhindert werden.

Vorteilhafterweise ist das Entnahmefach an einer Innenseite des Frontteils angeordnet ist. Die Außenseite des Frontteils kann dann glattflächig bzw. eben ohne irgendwelche Vorsprünge oder Ähnlichem ausgebildet sein, wobei ein Zugriff auf das Entnahmefach durch die Entnahmeöffnung gegeben ist. Dabei hat die Anordnung des Entnahmefachs an der Innenseite des Frontteils darüber hinaus den Vorteil, dass dieses relativ unabhängig vom Drucker im Druckmodul befestigt ist und somit immer korrekt zur Entnahmeöffnung positioniert ist.

In einer besonders bevorzugten Ausgestaltung ist an der Innenseite des Frontteils ein Aufnahmefach für einen insbesondere als Mini-PC ausgebildeten Rechner angeordnet. Mit einem derartigen Rechner ist das Druckmodul voll betriebsfähig und somit autark und ohne viel Installationsaufwand einsetzbar. Durch die Anordnung an der Innenseite des Frontteils ist der Rechner dann für Wartungsarbeiten durch einfaches Öffnen des Frontteils einfach und unabhängig vom Drucker zugänglich.

Dabei kann vorgesehen sein, dass das Aufnahmefach für den Rechner und das Entnahmefach beispielsweise über durchgehende Seitenwände zusammenhängen. Das Aufnahmefach und das Entnahmefach stellen so eine Einheit dar, die relativ stabil ist und auch das Frontteil zusätzlich versteifen kann.

Bevorzugterweise bilden der Rechner mit der Bedienerschnittstelle und gegebenenfalls der Kamera eine austauschbare Einheit. Jedes Druckmodul weist somit einen eigenen Rechner mit Bedienerschnittstelle und Kamera auf, wobei diese Einheit im Falle eines Defekts einfach ausgetauscht und eine neue, vorkonfektionierte Einheit eingesetzt werden kann. Mögliche Ausfallzeiten werden so kurz gehalten.

Vorzugsweise ist der Aufnahmeraum durch einen Regalboden unterteilt, der insbesondere auf Stegen aufliegt. Damit können unterschiedlich große Drucker immer derart im Gehäuse des Druckmoduls untergebracht werden, dass fertig gestellte Druckmedien problemlos ins Entnahmefach gelangen und von dort entnommen werden können.

Dabei ist besonders bevorzugt, dass die Stege innenseitig am Bodenteil angeordnet sind und die Seitenteile miteinander verbinden. Die Stege dienen damit zusätzlich als Versteifung des Korpus und erhöhen somit die Stabilität des Gehäuses.

In einer bevorzugten Ausgestaltung ist in das Oberteil und/oder das Bodenteil jeweils eine zentrische, insbesondere runde Öffnung eingeformt. Diese Öffnung kann zum einen zum Luftaustausch dienen, um Wärme von den im Gehäuse untergebrachten Komponenten abzuführen, zum anderen können auch verschiedene Leitungen, die beispielsweise zur Stromversorgung oder zum Datenaustausch dienen durch diese Öffnungen in das Druckmodul geführt werden. Diese Leitungen sind so von außen nicht ohne weiteres zugänglich und damit beispielsweise vor Vandalismus geschützt.

Dabei ist besonders bevorzugt, dass parallel zur Öffnung insbesondere teilkreisförmige Schlitze in das Oberteil und/oder Bodenteil eingebracht sind. Diese Schlitze können besonders einfach zur Befestigung übereinander angeordneter Druckmodule genutzt werden und ermöglichen auch eine Winkeleinstellung um eine Hochachse der Druckmodule relativ zueinander.

In einer bevorzugten Ausgestaltung sind zwischen Frontteil und Korpus und/oder Rückenteil und Korpus Lüftungsschlitze ausgebildet. Diese Lüftungsschlitze sind visuell kaum erkennbar und ermöglichen dennoch eine effektive Belüftung des Aufnahmeraums und damit eines dort angeordneten Druckers sowie des Rechners. Dabei sind die Schlitze relativ schmal aber dafür lang ausgebildet.

Dabei können im Rückenteil Lüftungsöffnungen ausgebildet sein. Das Rückenteil ist in der Regel von einem Benutzer abgewandt und parallel zu einer Rückwand des Druckers ausgerichtet, in der häufig ebenfalls Entlüftungsöffnungen vorgesehen sind. Warme Luft kann so relativ ungehindert aus dem Gehäuse gelangen, wobei eine Verschmutzung der Lüftungsöffnungen beispielsweise durch den Benutzer eher unwahrscheinlich ist.

Bei einer bevorzugten Ausführungsform ist an einer Oberseite des Oberteils ein die Oberseite zumindest größtenteils abdeckendes Abdeckelement angeordnet, das insbesondere in einer in die Oberseite eingeformte Ausnehmung eingelassen ist. Dieses Abdeckelement kann an seiner Unterseite eine Geometrie aufweisen, mit der es beispielsweise mit der Öffnung und/oder den Schlitzen und/oder zusätzlichen Ausformungen im Oberteil des Korpus festgelegt, insbesondere verrastet werden kann. Damit ist eine von außen unsichtbare, diebstahlsichere Befestigung möglich. Das Abdeckelement kann dabei entweder relativ schlicht gehalten sein und im Wesentlichen nur Oberseite und die Öffnung des Oberteils abdecken, es ist aber auch möglich, die Abdeckung mit einer schnittfesten Oberfläche oder beispielsweise einem Sitzkissen zu versehen. Der Einsatzbereich des Druckmoduls kann so an unterschiedliche Gegebenheiten angepasst werden.

Vorzugsweise ist an der Oberseite ein insbesondere senkrecht dazu ausgerichtetes Multifunktionselement angeordnet ist. Das Multifunktionselement kann dabei beispielsweise in Form eines Regals oder einer Anzeigetafel oder auch als eine Kombination aus beiden ausgebildet sein. Dabei kann beispielsweise auch eine Anzeige wie ein LCD-Bildschirm am Multifunktionselement befestigt sein, auf der beispielsweise Preisinformationen oder eine Bedienungsanleitung angezeigt werden. Die Ansteuerung dieser Anzeige kann dann gegebenenfalls vom im Druckmodul untergebrachten Rechner aus erfolgen.

In einer bevorzugten Weiterbildung ist von einer Außenseite des Frontteils ein Auffangelement in der Entnahmeöffnung für Druckmedien eingehängt. Dieses Auffangelement kann beispielsweise als Kapazitätsvergrößerung für das integrierte Entnahmefach dienen, aber auch beispielsweise für Druckmedien in speziellen Formaten genutzt werden, die in dem integrierten Entnahmefach nicht faltenfrei aufgenommen werden könnten. Durch das Einhängen des Auffangelements in die Entnahmeöffnung kann es relativ einfach ohne bauliche Veränderung am Gehäuse angebracht und auch nachgerüstet werden.

Dabei weist das Auffangelement vorzugsweise ein erstes Umlenkelement und ein zweites Umlenkelement auf, wobei ein vom Drucker kommendes Druckmedium über die Umlenkelemente derart umgelenkt wird, dass es parallel zum Unterteil unterhalb des Unterteils gelangt. Über das erste Umlenkelement kann das Druckmedium dann durch die Entnahmeöffnung geführt und über das zweite Umlenkelement so umgelenkt werden, dass das Druckmedium unter den Korpus geführt wird. Dadurch können auch längliche Papierformate, wie beispielsweise Panoramaaufnahmen, produziert und faltenfrei im Auffangelement aufgefangen werden.

Bevorzugterweise weist das Drucksystem mindestens zwei übereinander angeordnete Druckmodule auf, die über eine Befestigungsvorrichtung miteinander verbunden sind. Die Kapazität des Drucksystems lässt sich so einfach vervielfachen, wobei durch die Anordnung der Druckmodule übereinander eine gute Raumausnutzung möglich ist.

Dabei greift die Befestigungsvorrichtung vorzugsweise in die Öffnung und/oder Schlitze des Oberteils des unteren Moduls und in die Öffnung und/oder Schlitze des Bodenteils des oberen Moduls ein und fixiert die Module relativ zueinander. Bei geschlossenen Gehäuse ist die Befestigungsvorrichtung dadurch unsichtbar und somit sicher vor Manipulationen untergebracht.

Vorzugsweise sind durch die Öffnungen Leitungen zur Stromversorgung und Datenübermittlung geführt. Die Druckmodule können so einfach untereinander verbunden und die darin angeordneten Drucker und Bedienerschnittstellen sowie Rechner nicht nur mit elektrischer Energie, sondern auch mit weiteren Daten versorgt werden. Dadurch kann relativ einfach eine Vernetzung der Druckmodule untereinander erfolgen und die Rechenleistung und/oder der jeweils verfügbare Speicher gemeinsam genutzt werden.

In einer bevorzugten Weiterbildung umfasst das Drucksystem mehrere auch nebeneinander angeordnete Druckmodule, die miteinander vernetzt sind und insbesondere ein gemeinsames Zugangsnetz bereitstellen. Damit ist das Drucksystem nicht auf übereinander angeordnete Druckmodule beschränkt, sondern kann sowohl mehrere nebeneinander als auch übereinander angeordnete Druckmodule umfassen. Durch ein gemeinsames Zugangsnetz ist dabei die Bedienung für einen Benutzer denkbar einfach, da er beispielsweise die gewünschten Bilder erst auf seinem Mobiltelefon auswählt und diese dann über das Zugangsnetz an das Drucksystem übermittelt. Erst anschließend muss ein beliebiges Druckmodul des Drucksystems ausgewählt werden, über das die Bilder bzw. Dokumente ausgegeben werden. Die Auswahl kann dabei beispielsweise über die Bedienerschnittstelle des ausgewählten Druckmoduls erfolgen, indem z.B. über die Kamera ein auf dem Mobiltelefon nach Übermittlung der Bilder/Dokumente empfangener maschinenlesbarer Code eingelesen wird. Die Bedienung des Drucksystems ist so denkbar einfach und eine Fehlbedienung nahezu ausgeschlossen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: ein Druckmodul eines Drucksystems in räumlicher Ansicht,
- Fig. 2: das Druckmodul mit geöffnetem Frontteil,
- Fig. 3: ein Drucksystem mit mehreren Druckmodulen und
- Fig. 4: ein Drucksystem mit mehreren Druckmodulen und einem Multifunktionselement.
- Fig. 5: das Druckmodul mit einem Auffangelement in räumlicher Ansicht und
- Fig. 6: das Druckmodul nach Fig. 5 in Seitenansicht.

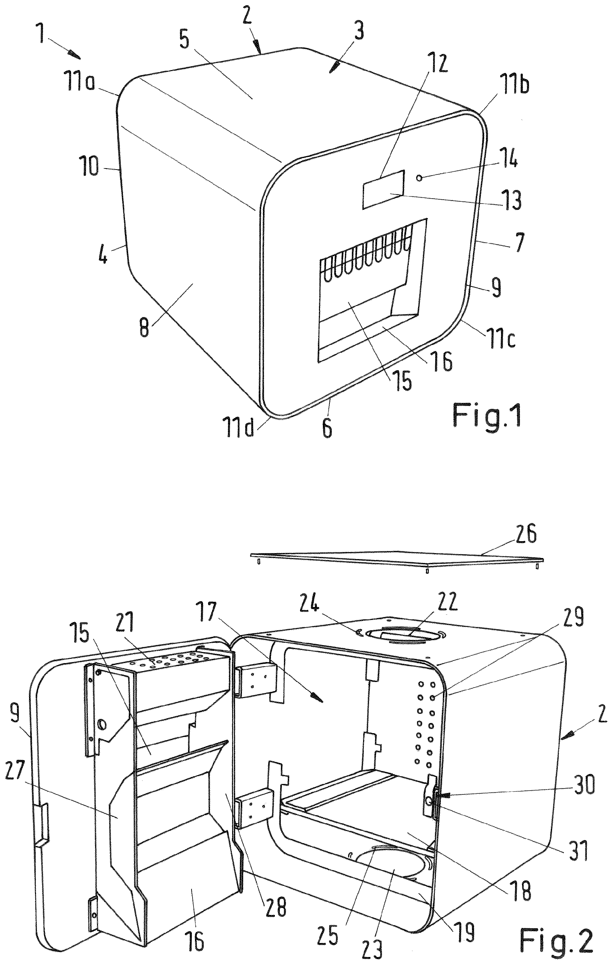

In Fig. 1 ist ein Drucksystem 1 mit einem Druckmodul 2 in räumlicher Darstellung dargestellt. Das Druckmodul 2 weist ein quaderförmiges Gehäuse 3 mit einem Korpus 4 auf. Der Korpus 4 umfasst ein Oberteil 5 und ein Bodenteil 6, die jeweils über Seitenteile 7, 8 derart miteinander verbunden sind, dass das Oberteil 5 und das Bodenteil 6 mit den beiden Seitenteilen 7, 8 den Korpus 4 in Form eines rechteckigen Rahmens ausbilden. Vorderseitig ist der Korpus 4 durch ein Frontteil 9 und rückseitig durch ein Rückenteil 10 geschlossen. Kanten 11a, 11b, 11c, 11d des Korpus', also Übergänge von den Seitenteilen 7, 8 zum Bodenteil 6 bzw. Oberteil 5 sind dabei relativ stark abgerundet. Dies ermöglicht eine einteilige bzw. einstückige Herstellung des Korpus 4 und minimiert beispielsweise das Risiko, dass ein Benutzer an diesen Kanten hängen bleibt. Dabei ist der Korpus 4 vorzugsweise aus Metall und das Frontteil 9 sowie das Rückenteil 10 vorzugsweise aus einem Kunststoff hergestellt.

Im Frontteil 9 ist eine Bedienerschnittstelle 12 ausgebildet. Die Bedienerschnittstelle 12 umfasst dabei eine berührungssensitive Anzeige 13, also ein sogenanntes Touch-Display, sowie eine Kamera 14.

Im Frontteil 9 ist ferner durch eine Entnahmeöffnung 15 ein ungehinderter Zugriff auf ein Entnahmefach 16 gegeben, das innenseitig am Frontteil 9 befestigt ist und somit innerhalb des Gehäuses 3 liegt. Das Entnahmefach 16 dient zur Aufnahme von fertig gestellten Druckmedien wie Bildern und/oder Dokumenten und überdeckt innenseitig die Entnahmeöffnung 15 derart, dass durch die Entnahmeöffnung 15 kein Zugang zu einem im Gehäuse 3 ausgebildeten Aufnahmeraum für einen Drucker möglich ist.

In Fig. 2 ist das Druckmodul 2 mit geöffnetem Frontteil 9 gezeigt. Das Frontteil 9 ist dafür schwenkbar am Seitenteil 8 befestigt und kann wie eine Tür geöffnet werden. Dadurch ist ein Zugang zum Inneren des Gehäuses möglich, in dem ein Aufnahmeraum 17 für einen Drucker ausgebildet ist. Der Aufnahmeraum 17 ist dabei durch einen Regalboden 18 unterteilt, auf den der Drucker positioniert wird. Der Regalboden 18 liegt dabei auf Stegen 19 auf, die innenseitig die Seitenteile 7, 8 miteinander verbinden und sich senkrecht vom Bodenteil 6 aus erstrecken. Dabei weisen die Stege 19 Vorsprünge auf, auf denen der Regalboden 18 in unterschiedlichen Höhen angeordnet werden kann. Dadurch kann eine Anpassung an unterschiedliche Drucker erfolgen.

An einer Innenseite 20 des Frontteils 9 ist nicht nur das Entnahmefach 16, sondern auch ein Aufnahmefach 21 angeordnet. Das Aufnahmefach 21 befindet sich dabei auf einer Position, in der es die von einer Außenseite des Frontteils 9 sichtbare Bedienerschnittstelle 12 überdeckt. Im Aufnahmefach 21 ist ein Rechner in Form eines Mini-PC wie beispielsweise ein Raspberry Pi, untergebracht, der mit der Bedienerschnittstelle verbunden ist und einen im Aufnahmeraum 17 untergebrachten Drucker beispielsweise über USB (Universal Serial Bus) ansteuern kann. Ferner weist der Rechner drahtgebundene und drahtlose Netzwerkverbindungen auf.

Das Aufnahmefach 21 und das Entnahmefach 16 sind über Seitenwände 27, 28 miteinander verbunden und bilden somit eine Einheit. Dadurch ergibt sich eine hohe Stabilität mit einem relativ großen Kontaktbereich zur Innenseite 20 des Frontteils 9, das damit ebenfalls versteift wird.

Sowohl im Oberteil 5 als auch im Bodenteil 6 ist jeweils zentrisch eine runde Öffnung 22, 23 ausgebildet, die von teilkreisförmigen Schlitzen 24, 25 umgeben sind. Durch diese Öffnungen 22, 23 kann zum einen ein Luftaustausch und somit eine Kühlung des Aufnahmeraums 21 erfolgen, zum anderen können Leitungen zur Stromversorgung und Datenübertragung durch sie in das Innere des Gehäuses 3 geführt werden. Die Schlitze 24, 25 können für eine nicht dargestellte Befestigungsvorrichtung genutzt werden, um beispielsweise übereinander angeordnete Druckmodule 2 aneinander zu fixieren. Im einfachsten Falls wird die Befestigungsvorrichtung dabei durch mehrere Schrauben-Muttern Paarungen gebildet.

Eine Oberseite des Oberteils 5 kann durch ein Abdeckelement 26 abgedeckt werden. Bei diesem Ausführungsbeispiel weist das rechteckige Abdeckelement 26 in seinen Eckbereichen vorstehende Füße auf, die in entsprechende Ausnehmungen im Oberteil 5 eingedrückt werden können und das Abdeckelement 26 so am Korpus 4 halten. Alternativ könnte am Abdeckelement 26 auch eine Befestigungsgeometrie ausgebildet sein, mit der es in der Öffnung 22 oder den Schlitzen befestigt, insbesondere verrastet werden kann. Gegebenenfalls kann im Oberteil 5 eine Ausnehmung ausgebildet sein, um das Abdeckelement 26 mehr oder weniger bündig aufzunehmen.

Im Rückenteil 10 sind Lüftungsöffnungen 29 ausgebildet, deren Form und Anzahl variieren kann. Ferner sind für einen guten Luftaustausch und damit eine gute Kühlung des Aufnahmeraums 17 zwischen dem Frontteil 9 und dem Korpus 4 sowie zwischen dem Rückenteil 10 und dem Korpus 4 Lüftungsschlitze ausgebildet, die insbesondere parallel zum Korpus verlaufen und so schmal sind, dass sie bei flüchtiger Betrachtung nicht auffallen. Dennoch kann darüber eine gute Entlüftung erfolgen.

Das Frontteil 9 ist am Seitenteil 8 schwenkbar befestigt und am anderen Seitenteil 7 über eine Halteeinrichtung 30 festlegbar, die ein Schloss 31 umfasst, das über einen Schlüssel bedienbar ist. Ein unbefugtes Öffnen des Druckmoduls 2 kann damit zuverlässig verhindert werden. Anstelle eines mechanischen Schlosses 31 könnte alternativ beispielsweise auch ein Magnetschloss verwendet werden, was jedoch in der Regel keine Diebstahlsicherheit bietet.

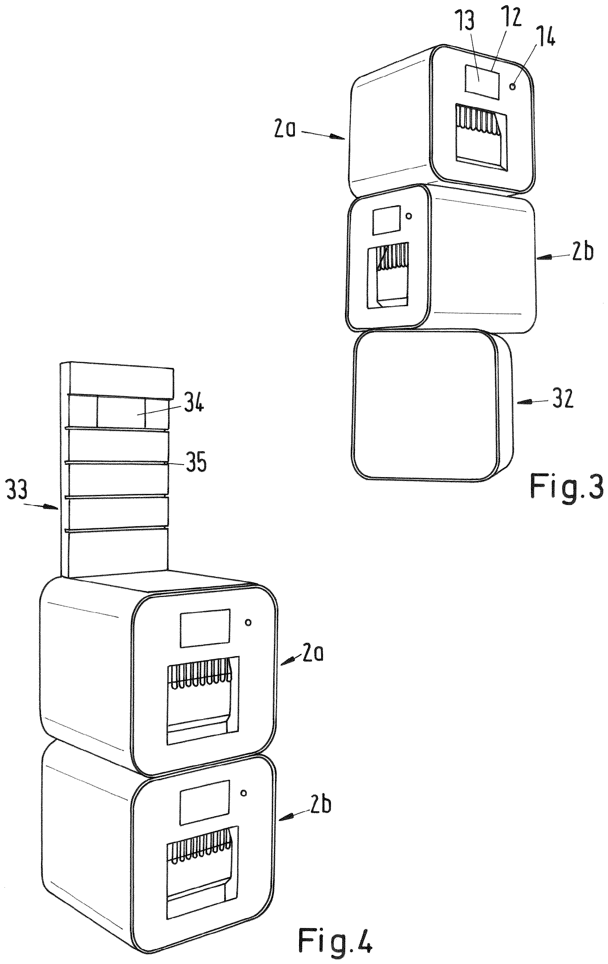

In Fig. 3 ist ein Drucksystem mit zwei übereinander angeordneten Druckmodulen 2a, 2b dargestellt, die auf einem weiteren Modul 32 angeordnet sind. Das weitere Modul 32 unterscheidet sich von den Druckmodulen 2a, 2b nur durch ein andersartiges Frontteil ohne Bedienerschnittstelle und Entnahmeöffnung. Im Übrigen ist das Modul 32 baugleich mit den Druckmodulen 2a, 2b und bietet zusätzlichen Stauraum, beispielsweise für Verbrauchsmaterialien.

Die Druckmodule 2a, 2b und das Modul 32 sind über nicht dargestellte Befestigungsvorrichtungen miteinander verbunden und in einem gewünschten Winkel um ihre Hochachse festgelegt. Dabei greifen die Befestigungsvorrichtungen in die teilkreisförmigen Schlitze, wobei eine Oberseite des obersten Druckmoduls 2a mit einem Abdeckelement versehen ist. Eine Versorgung der Druckmodule erfolgt dabei über Strom- und Datenleitungen, die unsichtbar durch die entsprechenden Öffnungen geführt sind.

In Fig. 4 ist ein weiteres Drucksystem mit zwei Druckmodulen 2a, 2b dargestellt, wobei an einer Oberseite des oberen Druckmoduls 2a ein Multifunktionselement 33 angeordnet ist, das sich senkrecht zur Oberseite des Druckmoduls 2a erstreckt. Das Multifunktionselement 33 weist bei diesem Beispiel eine Anzeige 34 sowie Nuten 35 auf, in die Klemmbretter, Haken und ähnliches eingebracht werden können.

Die Ausführungen nach Fig. 3 und Fig. 4 können natürlich problemlos miteinander und mit weiteren Druckmodulen kombiniert werden, um ein Drucksystem mit der jeweils gewünschten Kapazität zu erhalten. Dabei werden bevorzugterweise alle Druckmodule eines Drucksystems miteinander vernetzt und stellen ein gemeinsames Zugangsnetz, also einen sogenannten Hotspot, für die Benutzer zur Verfügung. Dabei können die Druckmodule insbesondere ihre jeweiligen Rechen- und Speicherkapazitäten gemeinsam nutzen. Die Auswahl des Druckmoduls für die Ausgabe der Bilder bzw. Dokumente erfolgt dann durch den Benutzer erst nach Auswahl und Hochladen der entsprechenden Dateien. Dabei erfolgt die Auswahl über die Bedienerschnittstelle beispielsweise durch Eingabe eines bestimmten Codes, wobei bervorzugterweise ein maschinenlesbarer Code, der beispielsweise auf dem Bildschirm des Mobiltelefons angezeigt wird, über die Kamera der Bedienerschnittstelle eingelesen wird. Der Druckvorgang kann dann sehr zeitnah starten, so dass das Druckmodul nach relativ kurzer Zeit bereits dem nächsten Benutzer zur Verfügung steht.

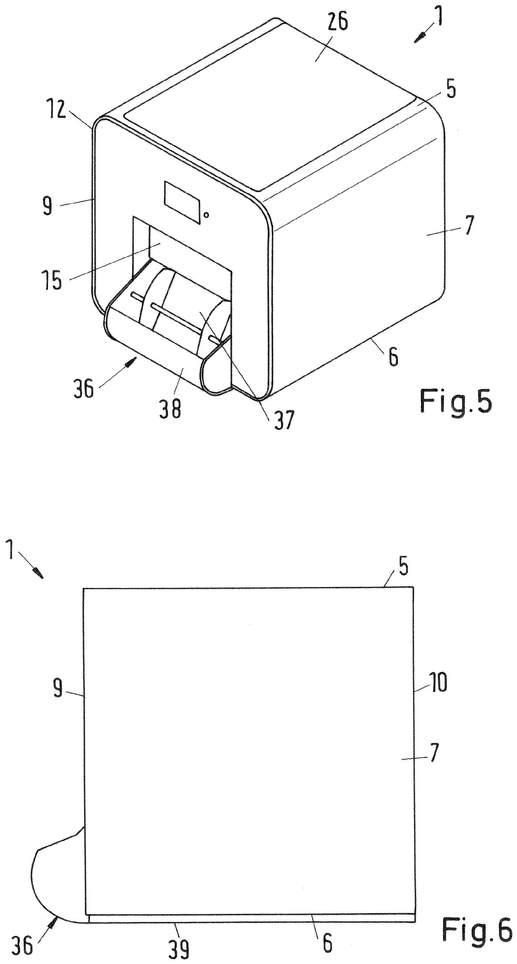

Fig. 5 zeigt das Druckmodul 2 in räumlicher Ansicht, wobei an einer Außenseite des Frontteils 9 ein Auffangelement 36 in der Entnahmeöffnung 15 für Druckmedien eingehängt ist. Längere Druckformate, wie Panoramadrucke oder Banner, werden dabei über erste Umlenkelemente 37 aus der Entnahmeöffnung 15 heraus geleitet und dann über ein zweites Umlenkelement 38 derart geführt, dass sie schließlich unter den Bodenteil 6 des Druckmoduls 1 gelangen.

Aus der Seitenansicht des Druckmoduls 1 gemäß Fig. 6 ist ersichtlich, dass die Druckformate dabei auf einem Fortsatz 39 abgelegt werden, der sich unterhalb des Druckmoduls 2 parallel zum Bodenteil 6 erstreckt.

Durch entsprechende, nicht dargestellte Füße bzw. Abstandshalter am Bodenteil 6 des Druckmoduls 2 steht für den Fortsatz 39 auch bei mehreren übereinander angeordneten Druckmodulen 2 ausreichend Raum zur Verfügung und der Fortsatz 39 wird durch das Gewicht des Druckmoduls 2 nicht belastet.

Die Erfindung ist nicht auf eine der vorbeschriebenen Ausführungsformen beschränkt, sondern in vielfältiger Weise abwandelbar. So kann beispielsweise das Drucksystem auch mehr als die gezeigten Druckmodule umfassen. Auch könnte das Gehäuse anstelle der gezeigten Würfelform mit gleichlangen Kantenlängen auch in zumindest eine Raumrichtung verlängert sein.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 1: Drucksystem
- 2: Druckmodul
- 3: Gehäuse
- 4: Korpus
- 5: Oberteil
- 6: Bodenteil
- 7: Seitenteil
- 8: Seitenteil
- 9: Frontteil
- 10: Rückenteil
- 11: Kante
- 12: Bedienerschnittstelle
- 13: Berührungssensitive Anzeige
- 14: Kamera
- 15: Entnahmeöffnung
- 16: Entnahmefach
- 17: Aufnahmeraum
- 18: Regalboden
- 19: Steg
- 20: Innenseite
- 21: Aufnahmefach
- 22: Öffnung
- 23: Öffnung
- 24: Schlitz
- 25: Schlitz
- 26: Abdeckelement
- 27: Seitenwand
- 28: Seitenwand
- 29: Lüftungsöffnung
- 30: Halteeinrichtung
- 31: Schloss
- 32: Modul
- 33: Multifunktionselement
- 34: Anzeige
- 35: Nut
- 36: Auffangelement
- 37: erstes Umlenkelement
- 38: zweites Umlenkelement
- 39: Fortsatz

## Patentansprüche

1. Drucksystem (1) zum Drucken von Bildern und/oder Dokumenten mit zumindest einem ersten Druckmodul (2), **dadurch gekennzeichnet, dass** das Druckmodul (2) ein quaderförmiges Gehäuse (3) mit einem Oberteil (5), einem Bodenteil (6), einem Frontteil (9), einem Rückenteil (9) und zwei Seitenteile (7, 8) aufweist, wobei das Oberteil (5) mit dem Bodenteil (6) sowie den zwei Seitenteilen (7, 8) einen Korpus (4) bilden, der durch das Frontteil (9) vorderseitig und durch das Rückenteil (10) rückseitig geschlossen ist, wobei innerhalb des Korpus (4) ein Aufnahmeraum (17) für einen Drucker und im Frontteil (9) eine Bedienerschnittstelle (12) sowie eine mit einem Entnahmefach (16) verbundene Entnahmeöffnung (15) für aus dem Drucker kommende Druckmedien ausgebildet ist.

2. Drucksystem nach Anspruch 1, **dadurch gekennzeichnet, dass** die Bedienerschnittstelle (12) eine berührungssensitive Anzeige (13) aufweist.

3. Drucksystem nach Anspruch 1 oder 2, **dadurch gekennzeichnet, dass** die Bedienerschnittstelle (12) eine Kamera (14) oder einen Barcodereader aufweist.

4. Drucksystem nach einem der vorhergehenden Ansprüche, **dadurch gekennzeichnet, dass** das Frontteil (9) schwenkbar an einem der Seitenteile (8) befestigt ist und am anderen Seitenteil (7) über eine Halteeinrichtung (30) lösbar festlegbar ist, wobei die Halteeinrichtung (30) insbesondere ein Schloss (31) aufweist, über das sie mit einem Schlüssel zwischen einer Haltestellung und einer Freigabestellung bewegbar ist.

5. Drucksystem nach einem der vorhergehenden Ansprüche, **dadurch gekennzeichnet, dass** das Entnahmefach (16) an einer Innenseite (20) des Frontteils (9) angeordnet ist.

6. Drucksystem nach einem der vorhergehenden Ansprüche, **dadurch gekennzeichnet, dass** an der Innenseite (20) des Frontteils (9) ein Aufnahmefach (21) für einen insbesondere als Mini-PC ausgebildeten Rechner angeordnet ist, wobei dass der Rechner insbesondere mit der Bedienerschnittstelle (12) und gegebenenfalls der Kamera (14) eine austauschbare Einheit bildet.

7. Drucksystem nach einem der vorhergehenden Ansprüche, **dadurch gekennzeichnet, dass** der Aufnahmeraum (17) durch einen Regalboden (18) unterteilt ist, der insbesondere auf Stegen (19) aufliegt, wobei die Stege (19) insbesondere innenseitig am Bodenteil (6) angeordnet sind und die Seitenteile (7, 8) miteinander verbinden.

8. Drucksystem nach einem der vorhergehenden Ansprüche, **dadurch gekennzeichnet, dass** in das Oberteil (5) und/oder das Bodenteil (6) jeweils eine zentrische, insbesondere runde Öffnung (22, 23) eingeformt ist, wobei gegebenenfalls parallel zur Öffnung (22, 23) insbesondere teilkreisförmige Schlitze (24, 25) in das Oberteil (5) und/oder Bodenteil (6) eingebracht sind.

9. Drucksystem nach einem der vorhergehenden Ansprüche, **dadurch gekennzeichnet, dass** zwischen Frontteil (9) und Korpus (4) und/oder Rückenteil (10) und Korpus (4) Lüftungsschlitze und/oder im Rückenteil (10) Lüftungsöffnungen (29) ausgebildet sind.

10. Drucksystem nach einem der vorhergehenden Ansprüche, **dadurch gekennzeichnet, dass** an einer Oberseite des Oberteils (5) ein die Oberseite zumindest größtenteils abdeckendes Abdeckelement (26) angeordnet ist.

11. Drucksystem nach einem der vorhergehenden Ansprüche, **dadurch gekennzeichnet, dass** am Oberteil (5) ein insbesondere senkrecht dazu ausgerichtetes Multifunktionselement (33) angeordnet ist.

12. Drucksystem nach einem der vorhergehenden Ansprüche, **dadurch gekennzeichnet, dass** von einer Außenseite des Frontteils (9) ein Auffangelement (36) in der Entnahmeöffnung (15) für Druckmedien eingehängt ist, wobei das Auffangelement insbesondere ein erstes Umlenkelement (37) und ein zweites Umlenkelement (38) aufweist, wobei ein vom Drucker kommendes Druckmedium über die Umlenkelemente (37, 38) derart umlenkbar ist, dass es parallel zum Bodenteil (6) unterhalb des Unterteils (6) gelangt.

13. Drucksystem nach einem der vorhergehenden Ansprüche, **dadurch gekennzeichnet, dass** es mindestens zwei übereinander angeordnete Druckmodule (2a, 2b) aufweist, die über eine Befestigungsvorrichtung miteinander verbunden sind.

14. Drucksystem nach Anspruch 13, **dadurch gekennzeichnet, dass** die Befestigungsvorrichtung in die Öffnung (22) des Oberteils (5) des unteren Moduls (2b) und in die Öffnung (23) des Bodenteils (6) des oberen Moduls (2a) eingreift und die Module (2a, 2b) relativ zueinander fixiert, wobei durch die Öffnungen (22, 23) insbesondere Leitungen zur Stromversorgung und Datenübermittlung geführt sind.

15. Drucksystem nach einem der vorhergehenden Ansprüche, **dadurch gekennzeichnet, dass** es mehrere auch nebeneinander angeordnete Druckmodule (2a, 2b) umfasst, die miteinander vernetzt sind und insbesondere ein gemeinsames Zugangsnetz bereitstellen.
